# EUROPÄISCHE PATENTANMELDUNG

(11) **EP 1 029 740 A2**
(43) Veröffentlichungstag der Anmeldung: **23.08.2000**
(21) Anmeldenummer: 00102190.6
(22) Anmeldetag: 09.02.2000
(51) Int. Cl.: B60R 5/02

(54) **Kraftfahrzeug mit Heckmotor**

(30) Priorität: 20.02.1999 DE 19907396
(71) Anmelder: Volkswagen Aktiengesellschaft, 38436 Wolfsburg (DE)
(72) Erfinder: Bartsch, Christian, 38547 Calberlah (DE); Münkner, Peter, 38114 Braunschweig (DE)

(57) **Zusammenfassung**

Die Erfindung betrifft ein Kraftfahrzeug (1) mit Heckmotor (2) mit einem frontseitigen Kofferraum (3) sowie mit einer im Fahrzeugfrontbereich (4) angeordneten Stirnwand (5) als Trennwand zwischen Kofferraum (3) und Fahrzeuginnenraum (8). Erfindungsgemäß ist in der Stirnwand (5) beifahrerseitig eine mit einer Abdeckung (10) verschließbare Durchladeöffnung (9) ausgebildet. Durch die Ausbildung einer derartigen Durchladeöffnung (9) in der Stirnwand (5) wird eine Vergrößerung des insgesamt zur Verfügung stehenden Laderaums dadurch erreicht, daß sich im Beifahrerbereich des Fahrzeuginnenraums (8) ein weiterer Laderaum (17) an den Kofferraum (3) anschließt. In einem derartig vergrößerten Laderaum können nunmehr auch solche größeren und insbesondere langen Gegenstände in einem Fahrzeug (1) mit Heckmotor (2) verstaut werden, die im frontseitigen Kofferraum (3) alleine nicht hätten verstaut werden können.

## Beschreibung

Die Erfindung betrifft ein Kraftfahrzeug mit Heckmotor nach dem Oberbegriff des Anspruchs 1.

Ein allgemein bekanntes, gattungsgemäßes Kraftfahrzeug mit Heckmotor weist einen frontseitigen Kofferraum auf, wobei im Fahrzeugfrontbereich eine Stirnwand als Trennwand zwischen Kofferraum und Fahrzeuginnenraum vorgesehen ist. Ebenso wie bei Fahrzeugen mit Frontmotoren, die einen heckseitigen Kofferraum aufweisen, können in einem derartigen Kofferraum größere Gegenstände und insbesondere lange Gegenstände nur schlecht oder ggf. überhaupt nicht verstaut werden. Derartige Gegenstände werden daher beispielsweise entweder mit gesonderten Fahrzeugen, wie z.B. Transportern, oder mit zusätzlichen Hilfsmitteln, wie z.B. einem Dachgepäckträger oder einem Anhänger, transportiert.

Bei Limousinen mit einem Frontmotor und heckseitigem Kofferraum ist es bekannt, zur Vergrößerung des heckseitigen Laderaums eine Durchladeöffnung zum Fahrgastraum vorzusehen. So ist aus der (DE 36 02 298 A1) eine Limousine bekannt, bei der diese Durchladeöffnung in ihrer Nichtgebrauchsstellung von einer Rückwand einer Rückenlehne eines Rücksitzes abgedeckt ist. Zur Freigabe der Durchladeöffnung und damit zur Vergrößerung des heckseitigen Laderaums wird die Rückenlehne hier in aufwendiger Weise mittels Führungsschienen über ein Sitzpolster des Rücksitzes in Richtung Fahrzeugfrontbereich verschoben. Eine ähnliche Anordnung bei Limousinen mit Frontmotor und heckseitigem Kofferraum ist aus der DE 38 14 028 A1 bekannt. Hier wird eine in aufwendiger Weise mehrfach klappbare Rückenlehne zur Freigabe der Durchladeöffnung in den Fahrzeuginnenraum verschwenkt.

Eine Durchlademöglichkeit in Verbindung mit einem Kraftfahrzeug mit Heckmotor ist nicht bekannt.

Es ist daher Aufgabe der Erfindung, ein Kraftfahrzeug mit Heckmotor zu schaffen, bei dem eine gute und einfache Verstauung von großen und insbesondere langen Gegenständen möglich ist.
Diese Aufgabe wird mit den Merkmalen des Anspruchs 1 gelöst.

Nach Anspruch 1 ist in der Stirnwand beifahrerseitig eine mit einer Abdeckung verschließbare Durchladeöffnung ausgebildet.

Durch die Ausbildung einer Durchladeöffnung in der Stirnwand wird eine Vergrößerung des insgesamt zur Verfügung stehenden Laderaums dadurch erreicht, daß sich im Beifahrerbereich des Fahrzeuginnenraums ein weiterer Laderaum an den Kofferraum anschließt. In einem derartigen vergrößerten Laderaum können nunmehr auch solche größeren und insbesondere langen Gegenstände in einem Fahrzeug mit Heckmotor verstaut werden, die im frontseitigen Kofferraum alleine nicht hätten verstaut werden können. Insbesondere bei Kleinfahrzeugen mit aufgrund der kurzen Baulänge ohnehin reduziertem Kofferraumvolumen kann somit auf einfache Weise eine effektive Vergrößerung des frontseitigen Kofferraums erreicht werden.

Durch das Verschließen der in der Stirnwand ausgebildeten Durchladeöffnung mittels einer Abdeckung wird erreicht, daß die Durchlademöglichkeit vom Kofferraum in den beifahrerseitigen Fahrzeuginnenraum schnell und einfach durch bloßes Entfernen der Abdeckung und ggf. Verfahren des Beifahrersitzes zu verwirklichen ist. Dabei bildet die Abdeckung in ihrer Geschlossenstellung in der Nicht-Durchladeposition einen Teil der Stirnwand, so daß in dieser Stellung die ursprüngliche Funktion der Stirnwand als Trennwand zwischen Kofferraum und Fahrzeuginnenraum gewahrt ist.

In einer ersten Ausführungsform ist die Abdeckung als eine Schwenkklappe ausgebildet. Diese Schwenkklappe ist am Randbereich der Durchladeöffnung schwenkbar angelenkt und in einer Geschlossenstellung und/oder einer Offenstellung verriegelbar. Eine derartige schwenkbare Anlenkung einer Schwenkklappe ist auf einfache Weise realisierbar, z. B. über ein Scharniergelenk. Durch die Verriegelungsmöglichkeit in der Geschlossenstellung und/oder der Offenstellung wird zudem erreicht, daß die Schwenkklappe stets klapperfrei in der gewünschten Stellung gehalten ist. Als Verschluß kann ein mit einem Schlüssel sperrbares Schloß und/oder eine Rast- oder Clipverbindung vorgesehen sein. Außerdem kann zwischen der Abdeckung und dem Randbereich der Durchladeöffnung eine Dichtung angeordnet sein, z.B. um den Kofferraum zum Fahrzeuginnenraum abzudichten und/oder zur Geräuschdämpfung. Die Bedienung der Schwenkklappe kann in einer einfachen Ausführungsform von Hand erfolgen. Alternativ dazu kann die Schwenkklappe aber z.B. auch über einen Schalter an der Schalttafel vom Fahrer elektrisch bedient werden und/oder mechanisch eine Verriegelung derart gelöst werden, daß die Schwenkklappe zumindest abklappbar ist.

Grundsätzlich ist es möglich, daß die Schwenkklappe sowohl in den Kofferraum als auch in den Beifahrerbereich schwenkbar ist. Bevorzugt ist die Schwenkklappe jedoch über eine bodenseitige Schwenkachse in den Kofferraum schwenkbar, und zwar dergestalt, daß die Schwenkklappe in der Offenstellung am Kofferraumboden flächig aufliegt. Damit ist eine einfache Bedienmöglichkeit von Hand bei guter Zugänglichkeit vom Kofferraum aus möglich. Mit der flächigen Auflage wird zudem erreicht, daß die Schwenkklappe den Beladevorgang als solches nicht behindert und zudem das Laderaumvolumen nicht verringert.

In einer alternativen Ausführungsform ist die Abdeckung als abnehmbarer Deckel ausgebildet. Dieser abnehmbare Deckel ist im eingesetzten Zustand bevorzugt vom Kofferraum her an der Stirnwand verriegelbar. Auch diese Form der Abdeckung der Durchladeöffnung ist einfach herstellbar und einfach zu bedienen. Als Verschluß kann auch hier wieder ein mit einem Schlüssel sperrbares Schloß und/oder eine Rast- oder Clipverbindung vorgesehen sein

In einer bevorzugten Ausführungsform ist die Durchladeöffnung in der Stirnwand in einem Bereich unterhalb einer Fahrzeugkonsole im Bereich des Fußraums eines Beifahrers ausgebildet. Damit kann im Beifahrerbereich sowohl eine Fahrzeugkonsole als auch eine Durchladeöffnung vorgesehen sein. Dadurch kann einerseits die Konsole als Schalttafel mit ihren variablen Nutzungsmöglichkeiten, z. B. mit Staufach und/oder Insassenschutzvorrichtung mit Airbagmodul, genutzt werden und steht andererseits gleichzeitig im Bereich des Beifahrersitzes ein sich an den Kofferraum anschließender, zusätzlicher freier Laderaum zur Verfügung. Die Durchladeöffnung kann auf verschiedene Weise ausgebildet sein und sich z.B. über die gesamte Höhe und Breite des Fußraums im Beifahrerbereich erstrecken.

Um die gesamte Innenraumlänge des Beifahrerbereichs als zusätzlichen Laderaum auszunutzen kann z.B. der Beifahrersitz aus dem Fahrzeug entnommen werden. Für eine schnelle und einfache Herstellung einer Durchlademöglichkeit wird vorgeschlagen, daß der Beifahrersitz, der ein Sitzpolster, eine Lehne und vorzugsweise eine Kopfstütze umfaßt, durch Absenken und/oder Verfahren und/oder Verstellen aus der Sitzposition in eine Durchladeposition gebracht wird. In dieser Durchladeposition sind das Sitzpolster, die Lehne und ggf. die Kopfstütze so angeordnet, daß sie eine in etwa horizontale Ladeebene im Beifahrerbereich des Fahrzeuginnenraums bilden. Diese Ladeebene liegt vorzugsweise in etwa in der gleichen Höhe wie ein Kofferraumboden, so daß im Beifahrerbereich ein sich vom Kofferraum bis in den Fahrzuginnenraum erstreckender und in etwa horizontal durchgehender Durchladebereich ausgebildet ist. Auch mit dieser Maßnahme kann nahezu die gesamte Innenraumlänge des Beifahrerbereichs als zusätzlicher Laderaum genutzt werden. Der Beifahrersitz kann dabei beispielsweise auch so abgesenkt und/oder verfahren und/oder verstellt werden, daß er in der Durchladeposition mit dem Sitzpolster in etwa in einem Randbereich der Durchladeöffnung angeordnet ist. An das Sitzpolster schließt sich dann in gerader Verlängerung die Lehne und ggf. die Kopfstütze an.

Anhand einer Zeichnung wird die Erfindung näher erläutert.

Die einzige Figur zeigt schematisch eine Seitenansicht einer Beifahrerseite eines Kraftfahrzeugs 1 als zweisitzigen Kleinkraftwagen, der einen Heckmotor 2 sowie einen frontseitigen Kofferraum 3 aufweist. Im Fahrzeugfrontbereich 4 ist ferner eine Stirnwand 5 als Trennwand zwischen Kofferraum 3 und Fahrzeuginnenraum 8 angeordnet. Diese Stirnwand 5 erstreckt sich im Fahrzeugfrontbereich 4 zwischen einer Konsole 6 und einem Bodenbereich 7.

In der Stirnwand 5 ist beifahrerseitig eine Durchladeöffnung 9 ausgebildet, die mittels einer Schwenkklappe 10 als Abdeckung verschließbar ist.

Die Schwenkklappe 10 ist über eine bodenseitige Schwenkachse 11, die am Randbereich der Durchladeöffnung 9 angeordnet ist, in den Kofferraum 3 schwenkbar. In der Offenstellung der Schwenkklappe 10 liegt diese flächig am Kofferraumboden 12 auf.

Das Kraftfahrzeug 1 umfaßt weiter einen Beifahrersitz 13. Dieser Beifahrersitz 13 ist aus einem Sitzpolster 14, einer Lehne 15 und einer an der Lehne 15 abnehmbar angeordneten Kopfstütze 16 aufgebaut.

Die Schwenkklappe 10 ist in einer Geschlossenstellung und/oder einer Offenstellung verriegelbar, z. B. mittels einer Rastverbindung oder einer Klipverbindung oder eines mit einem Schlüssel sperrbaren Schlosses, was hier allerdings nicht dargestellt ist.

Durch die Durchladeöffnung 9 entsteht im Bereich des Beifahrersitzes 13 ein zusätzlicher freier Laderaum 17. Für ein Durchladen von längeren Gegenständen wird zuerst ein Kofferraumdeckel 18 geöffnet. Anschließend wird die Schwenkklappe 10 z.B. von Hand in ihre Offenstellung verschwenkt und ggf. am Kofferraumboden 12 verriegelt. Schließlich wird der Beifahrersitz 13 durch entsprechendes Absenken und/oder Verfahren und/oder Verstellen aus der Sitzposition 19 in eine Durchladeposition 20 gebracht, bei der der Beifahrersitz 13 in eine hintere Stellung verfahren und abgesenkt sowie gleichzeitig die Lehne 15 auf das Sitzpolster 14 geklappt ist, so daß ein in etwa horizontaler Durchladebereich ausgebildet wird. In dieser Durchladeposition 20 können längere Gegenstände, wie z. B. Bretter, auf einfache Weise im Fahrzeug 1 verstaut werden.

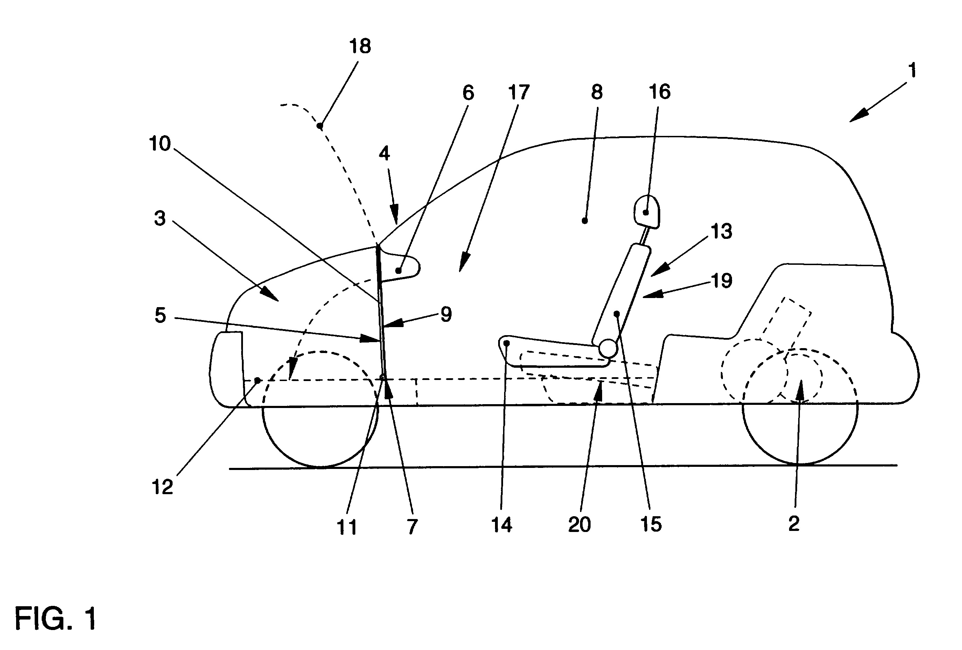

Für die Umrüstung in den normalen Fahrbetrieb mit Beifahrer wird zuerst die Durchladeöffnung 9 in der Stirnwand 5 durch entsprechendes Aufklappen und Verriegeln der Schwenkklappe 10 wieder verschlossen. Anschließend wird dann der Beifahrersitz 13 wieder in die in der Fig. 1 mit durchgezogenen Linien dargestellte Sitzposition gebracht, so daß ein Beifahrer darauf Platz nehmen kann.

### BEZUGSZEICHENLISTE

- 1: Kraftfahrzeug
- 2: Heckmotor
- 3: Kofferraum
- 4: Fahrzeugfrontbereich
- 5: Stirnwand
- 6: Konsole
- 7: Bodenbereich
- 8: Fahrzeuginnenraum
- 9: Durchladeöffnung
- 10: Schwenkklappe
- 11: Schwenkachse
- 12: Kofferraumboden
- 13: Beifahrersitz
- 14: Sitzpolster
- 15: Lehne
- 16: Kopfstütze
- 17: zusätzlicher Laderaum
- 18: Kofferraumdeckel
- 19: Sitzposition
- 20: Durchladeposition

## Patentansprüche

1. Kraftfahrzeug mit Heckmotor,
mit einem frontseitigen Kofferraum sowie mit einer im Fahrzeugfrontbereich angeordneten Stirnwand als Trennwand zwischen Kofferraum und Fahrzeuginnenraum, dadurch gekennzeichnet, daß
in der Stirnwand (5) beifahrerseitig eine mit einer Abdeckung (10) verschließbare Durchladeöffnung (9) ausgebildet ist.

2. Kraftfahrzeug nach Anspruch 1,
dadurch gekennzeichnet, daß
die Abdeckung als Schwenkklappe (10) ausgebildet ist, die am Randbereich der Durchladeöffnung (9) schwenkbar angelenkt und in einer Geschlossenstellung und/oder einer Offenstellung verriegelbar ist.

3. Kraftfahrzeug nach Anspruch 2,
dadurch gekennzeichnet, daß
die Schwenkklappe (10) über eine bodenseitige Schwenkachse (11) in den Kofferraum (3) schwenkbar ist dergestalt, daß die Schwenkklappe (10) in der Offenstellung am Kofferraumboden (12) in etwa flächig aufliegt.

4. Kraftfahrzeug nach Anspruch 1,
dadurch gekennzeichnet, daß
die Abdeckung als abnehmbarer Deckel ausgebildet ist, der im eingesetzten Zustand an der Stirnwand (5) verriegelbar ist.

5. Kraftfahrzeug nach einem der Ansprüche 1 bis 4,
dadurch gekennzeichnet, daß
die Durchladeöffnung (9) in der Stirnwand (5) in einem Bereich unterhalb einer Fahrzeugkonsole (6) im Bereich des Fußraums eines Beifahrers ausgebildet ist.

6. Kraftfahrzeug nach einem der Ansprüche 1 bis 5,
dadurch gekennzeichnet, daß
der Beifahrersitz (13), der ein Sitzpolster (14), eine Lehne (15) und vorzugsweise eine Kopfstütze (16) umfaßt, durch Absenken und/oder Verfahren und/oder Verstellen aus der Sitzposition (19) in eine Durchladeposition (20) bringbar ist, bei der das Sitzpolster (14), die Lehne (15) und ggf. die Kopfstütze (16) so angeordnet sind, daß sie eine in etwa horizontale Ladeebene im Beifahrerbereich des Fahrzeuginnenraums (8) bilden, die vorzugsweise in etwa in der gleichen Höhe wie ein Kofferraumboden (12) liegt, so daß im Beifahrerbereich ein sich vom Kofferraum (3) bis in den Fahrzeuginnenraum (8) erstreckender, in etwa horizontaler Durchladebereich (17) ausgebildet ist.
